# EUROPEAN PATENT SPECIFICATION

(11) **EP 0 548 411 B1**
(45) Date of publication and mention of the grant of the patent: **14.01.1998**
(21) Application number: 91203391.7
(22) Date of filing: 23.12.1991
(51) Int. Cl.: A01D 75/28

(54) **Pneumatic sieve levelling arrangement**
Pneumatische Siebnivellierungsvorrichtung
Dispositif pneumatique de nivelage d'un crible

(43) Date of publication of application: 30.06.1993
(73) Proprietor: NEW HOLLAND BELGIUM N.V., B-8210 Zedelgem (BE)
(72) Inventor: Provoost, Koen J., B-8480 Eernegem (BE); Lion, Stefaan A., B-9570 Lierde (BE); Paquet, Bert J.F., B-8200 Brugge (BE); Desnijder, Dirk J., B-9032 Wondelgem (BE)
(74) Representative: Vandenbroucke, Alberic

(56) References cited:
- EP-A- 0 323 833
- EP-A- 0 531 688
- GB-A- 2 052 238
- GB-A- 2 146 218
- US-A- 2 587 918
- US-A- 2 691 444
- US-A- 2 716 556

## Description

The present invention relates to combine harvesters and more particularly to the cleaning apparatus of combine harvesters with a view to improving substantially the crop cleaning characteristics thereof especially when the machines are operating inclined to the horizontal.

In a combine harvester, the incoming crop material is threshed and separated in the threshing and separating mechanism and the separated grain falls onto a grain pan, together with a certain amount of foreign material such as chaff and dirt; the grain pan being located beneath the threshing and separating mechanism. The grain pan is reciprocated longitudinally of the machine and is arranged so that this reciprocation moves the material thereon progressively rearwardly whilst at the same time effecting initial separation into layers of the heavier grain kernels and the lighter straw, chaff and other foreign material. These layers are then transferred to an upper or chaffer sieve which is also reciprocated and through which air is blown so as to render airborne the lighter foreign material for discharge from the rear of the machine. The grain falls through the upper sieve to a lower sieve, which also is reciprocated and has air blown through it to remove any remaining foreign material. The clean grain then falls through the lower sieve to a clean grain trough from where it is conveyed to the grain tank. Any straw which remains on the upper sieve is discharged from the rear end thereof for subsequent discharge to the ground.

It is readily appreciated that the efficiency of the cleaning system of a combine harvester is greater if threshed crop material is fed thereto in a regular manner and the cleaning air blast is uninterrupted. As a rule, this is achieved only if the combine harvester is in a virtually horizontal position. When the ground is irregular, and particularly when inclined, different things can happen in the cleaning mechanism dependent on a number of factors, such as the direction and extent of the inclination of the combine to the horizontal. If the combine is operating downhill, crop material may pile up on the grain pan and/or on the sieves at the lower points thereof, whereby it cannot be cleaned properly and clogging may occur. If, to the contrary, the combine is operating uphill, crop material passes too rapidly over the sieves and grain tends to spill over the rear edges thereof instead of passing through, thus resulting in unacceptable grain losses.

When the combine harvester is oriented such that it is inclined to the horizontal transversely in relation to the direction of travel, crop material separated from the straw in the threshing and separating means tends to move to the lower side of the grain pan. This sideward shifting of crop material is continued during its transport along the grain pan, during its transfer from the grain pan to the cleaning sieves, during its movement across the cleaning sieves and during its fall from one sieve to another sieve disposed therebelow. The result of all this is that the higher sides of the sieves are virtually free of crop material while the lower sides thereof are so heavily loaded with crop material that clogging may occur. This in turn results in grain emerging from the combine harvester at the rear instead of passing through the sieves and causing considerable grain losses at the lower side of the sieves. With uneven loading of the sieves, the cleaning air blast is unequally effective, so that cleaning is diminished considerably. Indeed, cleaning air tends to escape through the underloaded sieve sections; thus leaving the overloaded sieve sections with a reduced air blast.

Many devices have been conceived in the past to accommodate part or all of these conditions. According to one solution, the cleaning means are kept level by tilting the entire combine body in the one or other direction with respect to the wheels and the header. In some other arrangements, only the entire cleaning mechanism or portions thereof are maintained level. Some of these arrangements provide for levelling solely around a fore-and-aft extending axis, as problems arising from transverse inclinations are considered to be the most critical, whereas levelling the cleaning device lengthwise of the machine sometimes can be avoided in a relatively cheap manner by making the fan speed adjustable from the operator's platform.

In any event, all the foregoing arrangements incorporate one or other type of inclination sensor which is operative not only to sense the transverse and/or lengthwise inclination of the combine harvester but also to produce an output representative of said inclination in accordance to which the position of the cleaning mechanism or part of it is adjusted with the aim to maintain it in a substantially horizontal attitude.

A well known type of inclination sensor is a pendulum, which commonly is formed by a weight attached to one end of a rod, whereas the other end thereof is freely pivotally supported so that the pendulum always takes up a generally vertical orientation as a result of gravitational forces acting thereon.

In the combine harvester exemplified in US-A-2.587.918, the cleaning unit, including sieves and a fan, is supported by a ball mounting enabling a four-way levelling. A heavy weighing pendulum, provided underneath the cleaning unit, is operative to sense inclinations in the one or other direction and to maintain its vertical orientation. As a result of the rigid connection between the pendulum and the cleaning unit, the position of the latter is adjusted in unison with the former, so as to maintain said unit in a level condition. It will be appreciated however that this pure mechanical approach of levelling of a cleaning apparatus for combine harvesters is no longer practical for use on modern combine harvesters having much larger cleaning means. Moreover, no means are provided for damping the swinging movement of the pendulum, allowing it to oscillate or hunt about its vertical position. As a further result, the pendulum may be undesirably sensitive in following rapidly-changing angular displacements of the machine which might be caused by minor and immaterial unevenness of the ground.

An attempt to overcome some of the above identified drawbacks has been disclosed in US-A-2.716.556, which provides for the transverse levelling of an entire combine harvester by intermediary of a supporting wheel, vertically adjustable in response to the relative position of a pendulum. Said pendulum is rotatably supported in a case which is rigidly mounted on the combine frame. A tilt of the harvester in a transverse direction will cause a relative displacement between the pendulum and its case, resulting in the actuation of electrical switches which, through solenoid-actuated pneumatic valves, control the operation of a pneumatic cylinder, which in turn is operatively connected to the adjustable supporting wheel for levelling the machine. Although this construction allows for the use of a more compact pendulum arrangement, it nevertheless suffers from the disadvantage that the levelling control system is composed of separate control circuits, operating with totally different mediums, such as pressurized air and electricity for example in the arrangement under consideration. In addition, undesired oscillations of the pendulum are damped by a viscous fluid contained in a lower portion of the pendulum case, as such employing a still further medium. All this adds to the complexity of the system on the one hand and the unavoidable adoption of a considerable number of expensive components on the other hand.

It therefore is the objective of the present invention to provide the levelling arrangement of the cleaning unit of a combine harvester with an improved steering mechanism, the operation of which is based on the use of pressurized air, thereby simplifying the arrangement and reducing the number of required components considerably.

According to the invention a combine harvester is provided comprising :
- threshing and separating means and a cleaning mechanism disposed to receive threshed and separated crop material from the threshing and separating means; at least a part of said cleaning mechanism being pivotable around a generally fore-and-aft extending axis;
- inclination sensing means for sensing the lateral inclination of said pivotable part of the cleaning mechanism and producing an output indicative thereof; and
- position control means operable to adjust said pivotable part of said cleaning mechanism to a generally level attitude in the transverse direction.

Said combine harvester is characterized in that:
the inclination sensing means is in the form of an inclinometer of the pendulous type and comprises oppositely facing engagement surfaces; and
the position control means comprises :
   - pneumatic valve means operated in response to the output of said inclination sensing means and including first pneumatic valves, which are provided at opposite transverse sides of said engagement surfaces and each comprise an actuating mechanism; and
   - pneumatic actuator means operatively connected on the one hand to the pneumatic valve means and on the other hand to said pivotable part of the cleaning mechanism;
the arrangement being such that,
   . when the inclination sensing means is oriented in an inoperative, generally vertical position, said actuating mechanisms of the first pneumatic valves are closely spaced from the corresponding engagement surfaces, and
   . upon the inclination sensing means sensing a change in the transverse inclination of the pivotable part of the cleaning mechanism and aiming to adjust its vertical orientation in response thereto, the actuating mechanism of the pneumatic valve corresponding to the lower side of the transversely inclined cleaning mechanism is engaged by the corresponding engagement surface whereby said valve is shifted to an actuated position for initiating the levelling operation of said pivotable part of the cleaning mechanism, such that, when the combine harvester is transversely inclined relative to the vertical, the pneumatic actuator means pivot said pivotable part of the cleaning mechanism for maintaining it substantially horizontal.

Said first pneumatic valves are operative preferably to pneumatically control the position of a second pneumatic valve, which, in turn, is directly connected to the pneumatic actuator means. Flow retarding means may be incorporated inbetween respectively the first pneumatic valves and the second pneumatic valve enabling the position control means to postpone, eventually prevent, actuation of the second pneumatic valve when the pendulum is subjected to rapidly-changing angular displacements which do not demand any levelling adjustment of the cleaning mechanism.

A combine harvester in accordance with the present invention will now be described in greater detail, by way of example, with reference to the accompanying drawings, in which:
Figure 1 is a diagrammatic side elevation of a combine harvester incorporating a self-levelling cleaning unit; and
Figure 2 schematically shows the levelling control mechanism of the cleaning unit comprising a pendulum and a pneumatic circuit.

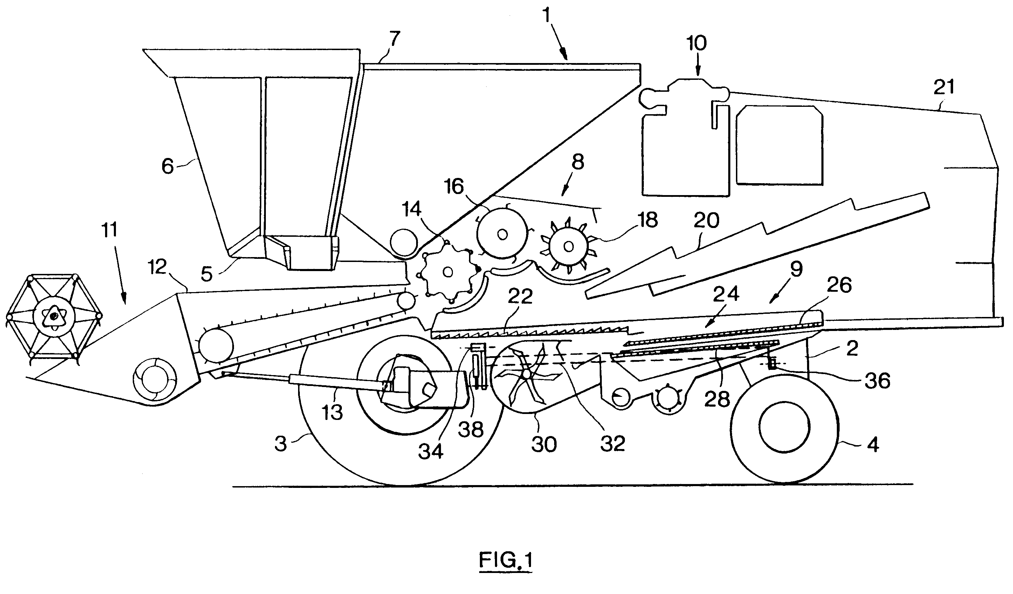

With reference to the drawings, particularly Figure 1, a combine harvester, generally indicated at 1, comprises a main chassis or frame 2 supported on a front pair of drive wheels 3 and a rear pair of steerable wheels 4. Supported on the main chassis 2 are an operator's platform 5, with operator's cab 6, a grain tank 7, a threshing and separating mechanism 8, a grain cleaning mechanism 9 and a power plant or engine 10. A conventional header 11 and straw elevator 12 extend forwardly of the main chassis 2 and the header 11 is pivotally secured to the chassis 2 for generally vertical movement which is controlled by extensible hydraulic cylinders 13.

As the combine harvester 1 is propelled forwardly over a field with standing crop, the latter is severed from the stubble by a sickle bar on the header 11, whereafter the header 11 and straw elevator 12 supply the cut crop to the threshing and separating mechanism 8. The crop received therein is threshed and separated, that is to say, the crop is rubbed and beaten, whereby the grain, seed or the like, is loosened and separated from the straw, coils or other discardable part of the crop.

The combine harvester illustrated in figure 1 comprises a conventional threshing and separating mechanism including a threshing cylinder 14, a straw beater 16 and a separator rotor 18. Conventional straw walkers 20 are operable, in use, to discharge a mat of remaining crop material (i.e. mainly straw as the grain is separated therefrom) through the straw hood 21.

Turning now to the cleaning operation, grain which has been separated from the straw falls onto the grain cleaning mechanism 9 comprising means to separate chaff and other impurities from the grain, and means to separate unthreshed parts, known as tailings. Cleaned grain is then elevated into the grain tank 7 and the tailings are reprocessed in separate tailings rethreshers (not shown) and returned to the cleaning mechanism 9 for repeated cleaning action.

The grain cleaning mechanism 9 exemplified in Figure 1 commonly is positioned underneath the threshing and separating mechanism 8 to receive the threshed grain precipitated therefrom on a grain pan 22. Generally, the cleaning mechanism 9 is operatively connected to an eccentric drive (not shown) to effect a generally fore-and-aft reciprocating movement thereof to convey the threshed grain in a rearward direction. Sieve means 24 are positioned rearwardly of the grain pan 22 to receive threshed grain conveyed rearwardly therefrom and clean the threshed grain from chaff and other debris conveyed therewith. Typically, the sieve means 24 include an upper chaffer sieve 26 and a lower cleaning sieve 28 mounted for opposing fore-and-aft reciprocating movement. A fan 30 is located beneath the grain pan 22, in front of the sieve means 24 to blow air upwardly through the latter in order to remove chaff and debris from the threshed grain.

The grain pan 22, sieve means 24 and the fan 30 are supported by a rectangularly shaped subframe 32 (shown in phantom lines only in Figure 1) which is pivotable about an axis extending longitudinally of the machine. To this end, the subframe 32 is carried on the combine frame 2 by means of a forwardly and a rearwardly located mounting, schematically indicated respectively at 34 and 36. An actuator 38 is provided between the combine frame 2 on the one hand and the subframe 32 on the other hand so as to enable an angular displacement between both frames 2 and 32 for maintaining the subframe 32, and hence the cleaning mechanism 9, substantially horizontal irrespective of the lateral inclination of the combine harvester 1.

The components of the combine harvester so far described providing for the levelling of the entire cleaning mechanism 9 are disclosed in greater detail in GB-B-2.052.238 to which reference is made.

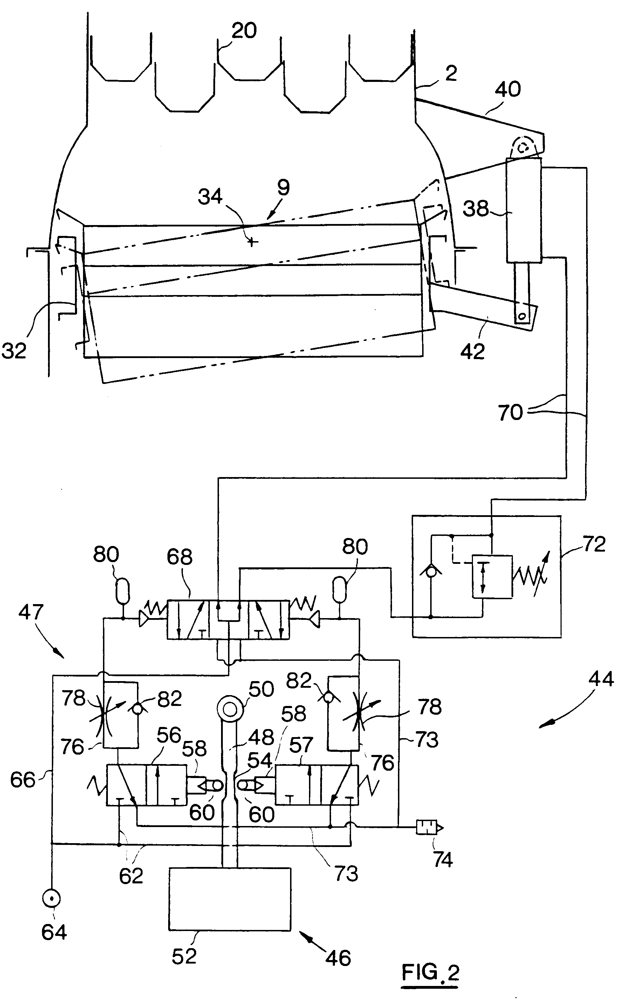

Referring now to Figure 2, especially the upper portion thereof, the cleaning mechanism 9 is schematically shown in cross section as seen from the rear of the combine harvester 1. The actuator 38 already mentioned extends between a bracket 40 rigidly connected to the combine frame 2 and an extension 42 projecting from the subframe 32. As already referred to above, actuation of the actuator 38 in the one or other direction results in a pivotal movement of the subframe 32 around an axis extending fore-and-aft through the pivot 34; the cleaning mechanism 9 of Figure 2 being shown only in two possible positions out of a range of adjustable attitudes, namely in full lines for representing operation of the combine harvester 1 on level ground (actuator 38 in neutral position) and in phantom lines when the combine harvester 1 is inclined to the right as seen in the direction of Figure 2 (actuator 38 in retracted position). It readily will be appreciated that the extended state of the actuator 38 corresponds with the mirror image of the phantom line position of the cleaning mechanism 9 for maintaining the latter transversely horizontal when the combine 1 is inclined to the left.

Operation of the actuator 38 is regulated by a control mechanism 44 which hereinafter will be described in greater detail by reference to the schematic diagram represented in the lower portion of Figure 2. The control mechanism 44 is composed of two major structures being, on the one hand, an inclination sensing means 46, comprising a pendulum, and, on the other hand, a position control circuit 47, comprising a.o. pneumatic valves. Preferably, as well the pendulum 46 as the components of the position control circuit 47 (except the actuator 38) are mounted on a support plate (not shown), which in turn is fixedly secured at a suitable location to the subframe 32, for example in front of the fan 30 beneath the grainpan 22.

The pendulum 46 is of a well known construction having an elongated rod 48 one end of which being freely pivotally connected at 50 to the above mentioned support plate and the other end of which carrying a weight 52. The rod 48 is equipped intermediate its ends with oppositely facing flattened surfaces 54, the function of which will be explained furtheron. The pivot 50 preferably comprises a low friction bearing so that any transverse inclination of the cleaning mechanism 9 away from the horizontal in either of the two possible directions is sensed immediately by intermediary of gravitational forces acting on the weight 52 and aiming to maintain the pendulum 46 in a generally vertical position. It will be understood that, as the cleaning mechanism 9 is allowed to pivot only around a longitudinal axis of the machine, the pendulum 46 consequently is mounted to swing only transversely of the direction of forward motion of the harvester.

Incorporated in the position control circuit 47, identical pneumatic valves 56, 57 are mounted at opposite transverse sides of the pendulum rod 48. Each valve 56, 57 is a three-port, two-position directional control valve (hereinafter called a 3/2 valve for ease of reference), and comprises a "pilot controlled" head 58 with a ball-type actuating member 60. The operation of the valves 56 and 57 is as follows. Upon mechanical actuation of the ball 60, the "pilot controlled" head 58 is triggered to shift the valve spool from a first, non-actuated position depicted in Figure 2 towards a second, actuated position (not illustrated) thereby reversing and redirecting internal flow of pressurized air through the valve. The expression "pilot controlled" is well known in the art and implies that the shifting of the valve spool from the non-actuated towards the actuated position is enhanced by the medium running through the valve, in casu pressurized air. As such, very low actuating forces on the ball 60 already permit to shift the valve spool independent of the operating pressure reigning in the valve.

It has been found that a 3/2 valve suitable for the present application is manufactured by Bosch under reference number 0 820 402 014. This valve is operated already with an actuating force of only 0,6 N what allows for the use of a compact pendulum 46 with a light weight 52. Furthermore, the effective stroke of the ball 60 is only 1,3 mm, meaning that, if the 3/2 valves 56 and 57 are mounted such that the balls 60 thereof, in the non-activated position, nearly touch the flattened surfaces 54 of the pendulum rod 48, then a very sensitive pendulum arrangement can be obtained which already responds to variations in inclination in the range of 0,5° to 1°.

Of course, the combine operator may prefer to have a less sensitive system, which allows variations in inclination of some degrees to occur without immediately resulting in a readjustment of the position of the cleaning mechanism 9. This easily can be accomplished by disposing the 3/2 valves 56, 57 at a larger spacing from the pendulum rod 48, thereby permitting the pendulum 46 to travel over a larger distance before actuating one of the 3/2 valves 56, 57.

The 3/2 valves 56 and 57 are connected via pressurized air supply lines 62, normally in the form of plastic tubes or hoses, to a pressure source, generally indicated at 64, which commonly comprises an air reservoir (not shown) held at a constant working pressure in the order of 8 bar by an air compressor (equally not shown); both said air reservoir and said air compressor being suitably housed on the combine harvester 1. The pressure source 64 also directly provides air via a pressure line 66 to a five-port, three-position directional control valve 68, hereinafter referred to as a 5/3 valve, which, in the neutral position shown in Figure 2, pressurizes both sides of the double acting pneumatic actuator 38 via pressure lines 70. It will be appreciated however by a person skilled in the art that an equal pressure at the rod side and the cylinder side of the actuator 38 would result in an extension thereof, what is unacceptable since, in the neutral position of the 5/3 valve 68, a stationary state of the cylinder 38 is expected. To solve this problem, an adjustable pilot controlled pressure regulator valve 72 is incorporated in the pressure line 70 leading to the cylinder side of the actuator 38 for reducing the pressure at this side and hence obtaining equal, oppositely directed forces acting on the plunger of the actuator 38, whereby the latter is held in a stationary, intermediate position. The presence of the adjustable valve 72 is also found advantageous to compensate for a possible unbalance of the subframe 32 which might exist when drive elements of the cleaning arrangement are mainly concentrated on one lateral side of the combine 1, as a consequence tending to tilt the subframe 32 away from its horizontal attitude.

The position of the 5/3 valve 68 is pneumatically controlled by pressure lines 76 departing from the 3/2 valves 56 and 57. Accordingly, in essence, it could be said that a "servo mechanism" is incorporated in the position control circuit 47 allowing for the use of, on the one hand, a heavier dimensioned main valve 68 for directly controlling motion of the actuator 38 but requiring a considerable actuating force for shifting the valve spool, and, on the other hand, lighter dimensioned steering valves 56, 57 controlling the position of the valve 68 but of which the spool actuating force is minimal, hence requiring only a light pendulum 46. A 5/3 valve suitable for the present application is manufactured by Bosch under reference number 0 820 234 003.

Excessive air in the position control circuit 47 emerging from either the 3/2 valves 56, 57 or the 5/3 valve 68 can be vented to the atmosphere via exhaust lines 73 through a common silencer 74.

According to the described embodiment of the present invention, each pressure line 76 comprises an adjustable flow control valve 78, in casu a throttle valve or air restrictor valve, and a pneumatic accumulator 80, thereby providing the means to retard actuation of the 5/3 valve 68 when the line 76 becomes pressurized. Indeed, a pressurized air flow from either one of the valves 56, 57 towards the valve 68 first of all passes through the corresponding valve 78, by which it is throttled down, whereafter it may expand in the space confined by the corresponding accumulator 80. It thus will be clear that an instantaneous pressure increase in the line 76 inbetween one of the valves 56, 57 and the corresponding valve 78 will not immediately result in a same pressure increase behind the latter valve 78 as, due to the fact that air is compressible, the reduced flow of air through said valve 78 needs some time to completely fill and augment the pressure in the air accumulator (80). In essence, it will be appreciated that the foregoing arrangement is comparable to a "lost motion control" in mechanics.

Only when the pressure increase in front of the throttle valve 78 is sustained long enough i.e. above a predetermined threshold value, then the pressure in the air accumulator 80 gradually will augment for ultimately reaching a height sufficient to operate the valve 68. In practice, the air accumulator 80 and the throttle valve 78 are chosen, respectively adjusted such that a pressurized air flow from a 3/2 valve 56 or 57 through one of the lines 76 of less than half a second has no effect whatsoever on the spool position of the 5/3 valve 68, whereas an air flow maintained for longer than the threshold value of half a second is operative to shift the valve 68 in the one or other direction.

As an alternative for the accumulators 80, the pressure line connection inbetween the throttle valve 78 and the 5/3 valve 68 may be oversized in length and/or diameter such that an increased internal volume is created thereby equally providing a buffer capacity.

In parallel connection with each flow control valve 78, a non-return valve 82 is provided, allowing compressed air to by-pass said valve 78 when the pressure line 76 is vented to the atmosphere upon a corresponding one of the 3/2 valves 56, 57 returning to the non-actuated position. In other words, the retardive action of the "lost motion control" is only operational when air flows in a direction to actuate the 5/3 valve 68, whereas, to the contrary, an immediate, non-retarded return of the 5/3 valve to its neutral position is ensured.

In operation, when the combine harvester 1 is operating on perfectly level ground, the pendulum 46 is in an inoperative position hanging vertically downwardly inbetween the 3/2 valves 56, 57 without contacting either one of the actuating mechanisms 60 thereof, resulting in the position control circuit 47 being in the neutral condition shown in Figure 2. In said condition, pressurized air is provided through line 66 to the 5/3 valve 68 in which the flow is split up in order to pressurize both sides of the actuator 38 so as to maintain the cleaning mechanism 9 in the full line position of Figure 2, at right angles relative to the upright side members of the machine frame 2. As already explained above, the pressure regulator valve 72 ensures a pressure reduction at the cylinder side of the actuator 38 for balancing the operation thereof.

Since the position control circuit 47 is mainly symmetrical (except for the presence of the valve 72 in only one of the pressure lines 70) the operation of the combine harvester 1 on transverse slopes will now be described, by way of example, with reference only to a slope extending downwardly to the right.

When the combine harvester 1 gradually moves from level ground towards said rightwards inclined slope, the pendulum weight 52 as a consequence is also urged to the right whereby the flattened surface 54 of the pendulum rod 48 engages the ball 60 of the 3/2 valve 57, which instantly is shifted such that pressurized air is admitted from the pressure source 64 into the corresponding pressure line 76. Provided the 3/2 valve 57 is actuated for more than half a second, the 5/3 valve 68 also becomes actuated and shifts to the left as seen in Figure 2 in order, on the one hand, to provide pressurized air to the rod side of the actuator 38 and, on the other hand, to allow air to be vented from the cylinder side of the actuator 38 through the exhaust line 73. As a result, the actuator 38 is retracted and the subframe 32 carrying the cleaning mechanism 9 is pivoted in the direction of the phantom line position depicted in Figure 2 for as long as the cleaning mechanism 9 has not reached a level attitude. Indeed, due to the direct mounting of the pendulum arrangement on the subframe 32, pivotal movement of the cleaning mechanism 9 is immediately sensed by the pendulum arrangement moving in unison therewith. In other words, by moving the cleaning mechanism 9 to a levelled condition, also the pendulum 46 is returned to its inoperative position, thereby interrupting actuation of the 3/2 valve 57 and hence of the 5/3 valve 68, the spool of which is returned to its central position so that the actuator 38 gets pressurized again at both sides and thus virtually is arrested at the position to which it has been moved.

It will be appreciated that subsequent changes in the lateral inclination of the combine harvester 1 in the one or other direction result in a similar operation of the levelling control mechanism 44 to effect a movement of the subframe 32 in one direction or another with the subframe 32 always seeking a level orientation.

It already has been mentioned that the pendulum 46 is freely pivotally supported and no means are provided which directly act thereon for damping its swinging movement, meaning that the pendulum 46 under all circumstances instantaneously reacts to variations in lateral inclination, thereby making it very sensitive. The foregoing however implies that even small, temporary and rapidly changing angular displacements, such as caused by moving at right angles through a local ditch, are reacted to by the pendulum, which may bounce back-and-forth and results in alternating actuation of the 3/2 valves 56, 57. However, like it has been explained hereabove, a damping arrangement, in the form of a "lost motion control" including flow control valves 78 and accumulators 80, is incorporated in the pneumatic circuit 47. The damping arrangement is operative, by flow restriction and accumulation, to retard actuation of the 5/3 valve 68 and even to prevent actuation when one of the valves 56, 57 is actuated for less than a preset threshold value. Consequently, the position of the grain cleaning mechanism 9 relative to the combine frame 2 is not actively changed upon encounter of an immaterial, local and thus temporary unevenness of the field.

Yet, the foregoing does not imply that the cleaning mechanism 9 is immovably locked in position when the valve 68 is in its central position. An additional advantage in the application of the pneumatic circuit 47 has been experienced in that the pneumatic actuator 38 functions as an air cushion, resiliently damping inertia forces transmitted from the subframe 32 via the frame extension 42 to the actuator rod, such forces being created when operating on broken ground. As such, the provision of expensive, shock-damping mountings for the actuator 38 is avoided.

It further will be appreciated that the pneumatic circuit 47 is extremely fit for being used in environments contaminated with dust particles as all pneumatic components are air sealed and exclude any penetration of dust in the system; this being in contrast to electrical circuits which comprise vulnerable contacts and switches which are prone to malfunctioning when subjected to a polluted atmosphere. It moreover is experienced that the pneumatic circuit of the present invention provides a "transparent" system, of which a rarely occurring breakdown quite easily can be repaired by the combine operator.

It will be understood that, notwithstanding the fact that the invention has been described in detail with reference to a combine harvester having a cleaning mechanism adjustable only around a fore-and-aft extending axis, the invention is also applicable to combine harvesters in which the cleaning unit is adjustable also lengthwise.

## Claims

1. A combine harvester (1) comprising :
- threshing and separating means (8) and a cleaning mechanism (9) disposed to receive threshed and separated crop material from the threshing and separating means (8); at least a part of said cleaning mechanism (9) being pivotable around a generally fore-and-aft extending axis;
- inclination sensing means (46) for sensing the lateral inclination of said pivotable part of the cleaning mechanism (9) and producing an output indicative thereof; and
- position control means (47) operable to adjust said pivotable part of said cleaning mechanism (9) to a generally level attitude in the transverse direction; and
characterized in that:
the inclination sensing means (46) is in the form of an inclinometer of the pendulous type and comprises oppositely facing engagement surfaces (54); and
the position control means (47) comprises :
- pneumatic valve means (56, 57 and 68) operated in response to the output of said inclination sensing means (46) and including first pneumatic valves (56 and 57), which are provided at opposite transverse sides of said engagement surfaces (54) and each comprise an actuating mechanism (60); and
- pneumatic actuator means (38) operatively connected on the one hand to the pneumatic valve means (56, 57 and 68) and on the other hand to said pivotable part of the cleaning mechanism (9);
the arrangement being such that,
. when the inclination sensing means (46) is oriented in an inoperative, generally vertical position, said actuating mechanisms (60) of the first pneumatic valves (56 and 57) are closely spaced from the corresponding engagement surfaces (54), and
. upon the inclination sensing means (46) sensing a change in the transverse inclination of the pivotable part of the cleaning mechanism (9) and aiming to adjust its vertical orientation in response thereto, the actuating mechanism (60) of the pneumatic valve (56 or 57) corresponding to the lower side of the transversely inclined cleaning mechanism (9) is engaged by the corresponding engagement surface (54) whereby said valve (56 or 57) is shifted to an actuated position for initiating the levelling operation of said pivotable part of the cleaning mechanism (9), such that, when the combine harvester (1) is transversely inclined relative to the vertical, the pneumatic actuator means (38) pivot said pivotable part of the cleaning mechanism (9) for maintaining it substantially horizontal.

2. A combine harvester according to claim 1 characterized in that the inclination sensing means (46) comprises a freely pivotable pendulum (46) including an elongated rod (48) one end of which carrying a weight (52) and the opposite end of which being connected to a pivot (50), operatively associated with said pivotable part of the cleaning mechanism (9).

3. A combine harvester according to claim 2 characterized in that said oppositely facing engagement surfaces (54) are provided on said elongated rod (48), intermediate its ends.

4. A combine harvester according to claim 3 characterized in that the positioning of the respective first pneumatic valves (56, 57) relative to the pendulum (46) is such that a change in the transverse inclination of said part of the cleaning mechanism (9) in the one or other direction of more than 0,5° results in an actuation of either one of the first pneumatic valves (56, 57).

5. A combine harvester according to claim 3 or 4 characterized in that the position control means (47) further comprises a source of pressurized air (64), connected in flow communication with a second pneumatic valve (68) of the valve means (56, 57 and 68); said second pneumatic valve (68) being operative :
- on the one hand, in its non-actuated position corresponding to the inoperative orientation of the pendulum (46), to pressurize both the rod and cylinder side of the pneumatic actuator means (38), thereby maintaining the pivotable part of the cleaning mechanism (9) in a virtually locked and level condition, and
- on the other hand, in an actuated position corresponding to an inclined orientation of the pendulum (46), to selectively extend or retract the actuator means (38) for effecting a transverse levelling adjustment of the pivotable part of the cleaning mechanism (9).

6. A combine harvester according to claim 5 characterized in that the first pneumatic valves (56, 57) are also connected in flow communication with the source of pressurized air (64) and are operable, in the actuated position, to pneumatically control the position of the second pneumatic valve (68).

7. A combine harvester according to claim 6 characterized in that
- the first pneumatic valves (56, 57) are of the three-way, two-position type, shutting off the supply of pressurized air in the non-actuated position thereof, whereas, in the actuated position of either one of said valves (56, 57), pressurized air is conducted therethrough towards a corresponding pressure line (76), operatively connecting said one first and second pneumatic valves (56 or 57, and 68), and
- the second pneumatic valve (68) is of the five-way, three-position type; the arrangement being such that the non-actuated state of both said first pneumatic valves (56 and 57) and said second pneumatic valve (68) correspond, whereas actuation of either one of the first valves (56 or 57) in response to an encountered transverse inclination in a given direction effects a selective shifting of the second valve (68) towards an actuated position matching with said encountered inclination.

8. A combine harvester according to claim 7 characterized in that each pressure line (76) operatively interconnecting a respective one of the first valves with the second valve ( 56 or 57, and 68) comprises a flow control valve (78) operative to throttle down or restrict the flow of air through each respective pressure line (76).

9. A combine harvester according to claim 8 characterized in that each said pressure line (76) further comprises an air accumulating means (80) provided inbetween said flow control valve (78) and said second pneumatic valve (68).

10. A combine harvester according to claim 9 characterized in that each said air accumulating means (80) is created by overdimensioning the portion of the corresponding pressure line (76) inbetween a respective one of the first valves (56, 57) and the second valve (68) in length and/or inner diameter.

11. A combine harvester according to claim 9 or 10 characterized in that, upon actuation of one of the first pneumatic valves (56 or 57), the corresponding flow control valve (78) and air accumulating means (80) cooperate to postpone actuation of the second pneumatic valve (68) during a given threshold period in order not to respond to the occurrence of rapidly-changing angular displacements of the combine harvester (1) by damping the operation of the position control means (47) ; the arrangement being such that
- continuous actuation of one of the first pneumatic valves (56 or 57) during a period shorter than said threshold period does not result in an actuation of the second valve (68) whereby the pivotable part of the cleaning mechanism (9) is maintained in its previously adjusted position, and
- provided that one of the first pneumatic valves (56 or 57) is actuated during a period longer than said threshold period, the actuation of the second valve (68) is only temporary postponed whereafter said valve (68) nevertheless is actuated so as to effect a levelling adjustment of the pivotable part of the cleaning mechanism (9).

12. A combine harvester according to claim 11 characterized in that the flow control valves (78) are adjustable enabling to predetermine the duration of the threshold period.

13. A combine harvester according to any of the claims 5 to 12 characterized in that
- pressure lines (70) operatively connect the second pneumatic valve (68) with the pneumatic actuator means (38); and
- the pressure line (70) allocated to the cylinder side of said actuator means (38) comprises a pilot controlled pressure regulator valve (72) operable, in the non-actuated position of the second pneumatic valve (68) whereby both the cylinder and rod side of the actuator means (38) are pressurized, to reduce air pressure at said cylinder side in order to obtain equal and oppositely directed forces in said actuator means (38), thereby virtually preventing movement thereof.

14. A combine harvester according to any of the claims 7 to 13 characterized in that each of the first pneumatic valves (56, 57) comprises a pilot controlled actuating mechanism (58) for reducing the required force of the pendulum (46) to actuate said valve (56, 57).

15. A combine harvester according to any of the preceding claims characterized in that the grain cleaning mechanism is mounted on a subframe (32), which is pivotable around an axis extending generally longitudinally of the combine harvester (1); the subframe (32) comprising a mounting member (42) to which one end of the pneumatic actuator means (38) is attached, whereas the other end thereof is connected to a further mounting member (40) on the machine frame (2), whereby transverse vibrations or shocks created in the subframe (32) due to e.g. operation of the combine harvester (1) on broken ground, are transmitted via said mounting member (42) towards the actuator means (38) and are resiliently damped therein by virtue of the compressed air contained in said actuator means (38) providing a cushioning effect.

16. A combine harvester according to claim 15, when appended to any of the claims 2 to 14, characterized in that at least the pendulum (46) and the first pneumatic valves (56, 57) are attached to a mounting plate which in turn is fixedly connected to the pivotable subframe (32) in such a manner that the pendulum (46) is operative to only sense changes in the transverse inclination of the subframe (32).

## Patentansprüche

1. Mähdrescher (1) mit:
- Dresch- und Trenneinrichtungen (8) und einem Reinigungsmechanismus (9) der zum Empfang von gedroschenem und abgetrennten Erntematerial von den Dresch- und Trenneinrichtungen (8) angeordnet ist, wobei zumindest ein Teil des Reinigungsmechanismus (9) um eine sich allgemein in Längsrichtung erstreckende Achse verschwenkbar ist,
- einer Neigungsmeßeinrichtung (46) zur Messung der seitlichen Neigung des verschwenkbaren Teils des Reinigungsmechanismus (9) und zur Erzeugung eines diese anzeigenden Ausgangs, und
- einer Positionssteuereinrichtung (47), die zur Einstellung des verschwenkbaren Teils des Reinigungsmechanismus (9) auf eine allgemein horizontale Lage in der Querrichtung betreibbar ist,
dadurch gekennzeichnet, daß
die Neigungsmeßeinrichtung (46) die Form eines Neigungsmessers vom Pendeltyp aufweist und entgegengesetzt gerichtete Eingriffsoberflächen (54) umfaßt, und
die Positionssteuereinrichtung (47) folgende Teile umfaßt:
- Pneumatikventileinrichtungen (56, 57 und 68), die in Abhängigkeit von dem Ausgang der Neigungsmeßeinrichtung (46) betätigt werden und erste Pneumatikventile (56 und 57) einschließen, die auf entgegengesetzten Querseiten der Eingriffsoberflächen (54) vorgesehen sind und jeweils einen Betätigungsmechanismus (60) umfassen, und
- eine pneumatische Stellgliedeinrichtung (38), die betriebsmäßig einerseits mit den Pneumatikventileinrichtungen (56, 57 und 68) und andererseits mit dem verschwenkbaren Teil des Reinigungsmechanismus (9) verbunden ist,
wobei die Anordnung derart ist, daß:
. wenn die Neigungsmeßeinrichtung (46) in einer allgemein vertikalen Ruhestellung angeordnet ist, die Betätigungsmechanismen (60) der ersten Pneumatikventile (56 und 57) in geringem Abstand von den entsprechenden Eingriffsoberflächen (54) angeordnet sind, und
. wenn die Neigungsmeßeinrichtung (46) eine Änderung der Querneigung des verschwenkbaren Teils des Reinigungsmechanismus (9) mißt und bestrebt ist, dessen vertikale Ausrichtung in Abhängigkeit hiervon einzustellen, der Betätigungsmechanismus (60) des Pneumatikventils (56 oder 57), der der unteren Seite des in Querrichtung geneigten Reinigungsmechanismus (9) entspricht, mit der entsprechenden Eingriffsoberfläche (54) in Eingriff kommt, wodurch das Ventil (56 oder 57) auf eine betätigte Position zur Einleitung des Nivellierungsvorganges des verschwenkbaren Teils des Reinigungsmechanismus (9) verschoben wird, derart, daß wenn der Mähdrescher (1) in Querrichtung gegenüber der Vertikalen geneigt ist, die pneumatische Stellgliedeinrichtung (38) den verschwenkbaren Teil des Reinigungsmechanismus (9) verschwenkt, um diesen im wesentlichen horizontal zu halten.

2. Mähdrescher nach Anspruch 1,
dadurch gekennzeichnet, daß die Neigungsmeßeinrichtung (46) ein frei verschwenkbares Pendel (46) umfaßt, das eine langgestreckte Stange (48) einschließt, von der ein Ende ein Gewicht (52) trägt, während das entgegengesetzte Ende der Stange mit einem Schwenkpunkt (50) verbunden ist, der betriebsmäßig dem verschwenkbaren Teil des Reinigungsmechanismus (9) zugeordnet ist.

3. Mähdrescher nach Anspruch 2,
dadurch gekennzeichnet, daß die entgegengesetzt gerichteten Eingriffsoberflächen (54) auf der langgestreckten Stange (48) zwischen deren Enden vorgesehen sind.

4. Mähdrescher nach Anspruch 3,
dadurch gekennzeichnet, daß die Anordnung der jeweiligen ersten Pneumatikventile (56, 57) bezüglich des Pendels (46) derart ist, daß eine Änderung der Querneigung des Teils des Reinigungsmechanismus (9) in der einen oder anderen Richtung um mehr als 0,5° zu einer Betätigung eines der ersten Pneumatikventile (56, 57) führt.

5. Mähdrescher nach Anspruch 3 oder 4,
dadurch gekennzeichnet, daß die Positionssteuereinrichtung (47) weiterhin eine Druckluftquelle (64) umfaßt, die in Strömungsverbindung mit einem zweiten Pneumatikventil (68) der Ventileinrichtungen (56, 57 und 68) verbunden ist, wobei das zweite Pneumatikventil (68) derart betreibbar ist, daß:
- es einerseits in seiner nicht-betätigten Position, die der Ruheausrichtung des Pendels (46) entspricht, sowohl die Kolbenstangen- als auch die Zylinderseite der pneumatischen Stellgliedeinrichtung (38) mit Druck beaufschlagt, wodurch der verschwenkbare Teil des Reinigungsmechanismus (9) in einem praktisch blockierten und horizontalen Zustand bleibt, und
- es andererseits in einer betätigten Position, die einer geneigten Ausrichtung des Pendels (46) entspricht, die Stellgliedeinrichtung (38) selektiv ausfährt oder einfährt, um eine Quer-Nivelliereinstellung des verschwenkbaren Teils des Reinigungsmechanismus (9) zu bewirken.

6. Mähdrescher nach Anspruch 5,
dadurch gekennzeichnet, daß die ersten Pneumatikventile (56, 57) weiterhin in Strömungsverbindung mit der Druckluftquelle (64) verbunden und in der betätigten Stellung betreibbar sind, um pneumatisch die Position des zweiten Pneumatikventils (68) zu steuern.

7. Mähdrescher nach Anspruch 6,
dadurch gekennzeichnet, daß
- die ersten Pneumatikventile (56, 57) vom Dreiweg-, Zweistellungs-Typ sind und in ihrer nicht-betätigten Position die Zufuhr von Druckluft sperren, während in der betätigten Stellung eines der Ventile (56, 57) Druckluft durch dieses hindurch zu einer entsprechenden Druckleitung (76) geleitet wird, die betriebsmäßig das eine erste und das zweite Pneumatikventil (56 oder 57, und 68) verbindet, und
das zweite Pneumatikventil (68) vom Fünfweg-, Dreistellungs-Typ ist, wobei die Anordnung derart ist, daß sich die nicht-betätigten Zustände der beiden ersten Pneumatikventile (56 und 57) und des zweiten Pneumatikventils (68) entsprechen, während eine Betätigung eines der ersten Ventile (56 oder 57) in Abhängigkeit von einer auftretenden Querneigung in einer vorgegebenen Richtung eine selektive Verschiebung des zweiten Ventils (68) in Richtung auf eine betätigte Position bewirkt, die an die aufgetretene Neigung angepaßt ist.

8. Mähdrescher nach Anspruch 7,
dadurch gekennzeichnet, daß jede Druckleitung (76), die betriebsmäßig ein jeweiliges der ersten Ventile mit dem zweiten Ventil (56 oder 57 und 68) verbindet, ein Strömungssteuerventil (78) umfaßt, das zur Drosselung oder Beschränkung der Luftströmung durch jede jeweilige Druckleitung (76) betreibbar ist.

9. Mähdrescher nach Anspruch 8,
dadurch gekennzeichnet, daß jede Druckleitung (76) weiterhin eine Luftakkumulatoreinrichtung (80) umfaßt, die zwischen dem Strömungssteuerventil (78) und dem zweiten Pneumatikventil (68) vorgesehen ist.

10. Mähdrescher nach Anspruch 9,
dadurch gekennzeichnet, daß jede Luftakkumulatoreinrichtung (80) durch Überdimensionierung eines Teils der entsprechenden Druckleitung (76) zwischen einem jeweiligen der ersten Ventile (56, 57) und dem zweiten Ventil (68) hinsichtlich der Länge und/oder des Innendurchmessers geschaffen ist.

11. Mähdrescher nach Anspruch 9 oder 10,
dadurch gekennzeichnet, daß bei einer Betätigung eines der ersten Pneumatikventile (56 oder 57) das entsprechende Strömungssteuerventil (78) und die Luftakkumulatoreinrichtung (80) zusammenwirken, um eine Betätigung des zweiten Pneumatikventils (68) während einer vorgegebenen Schwellenwertperiode hinauszuschieben, damit kein Ansprechen auf das Auftreten von sich schnell ändernden Winkelbewegungen des Mähdreschers (1) erfolgt, indem die Betriebsweise der Positionssteuereinrichtung (47) gedämpft wird, wobei die Anordnung derart ist, daß:
- eine kontinuierliche Betätigung eines der ersten Pneumatikventile (56 oder 57) während einer Periode, die kürzer als die Schwellenwertperiode ist, nicht zu einer Betätigung des zweiten Ventils (68) führt, wodurch der verschwenkbare Teil des Reinigungsmechanismus (9) in seiner vorhereingestellten Position gehalten wird, und
- unter der Voraussetzung, daß eines der ersten Pneumatikventile (56 oder 57) während einer Periode betätigt wird, die länger als die Schwellenwertperiode ist, die Betätigung des zweiten Ventils (68) lediglich vorübergehend hinausgeschoben wird, während anschließend das Ventil (68) dennoch betätigt wird, um eine Nivelliereinstellung des verschwenkbaren Teils des Reinigungsmechanismus (9) zu bewirken.

12. Mähdrescher nach Anspruch 11,
dadurch gekennzeichnet, daß die Strömungssteuerventile (78) einstellbar sind, um eine Vorherbestimmung der Dauer der Schwellenwertperiod zu ermöglichen.

13. Mähdrescher nach einem der Ansprüche 5 bis 12, dadurch gekennzeichnet, daß:
- Druckleitungen (70) das zweite Pneumatikventil (68) betriebsmäßig mit der pneumatischen Stellgliedeinrichtung (38) verbinden, und
- die der Zylinderseite der Stellgliedeinrichtung (38) zugeordnete Druckleitung (70) ein pilotgesteuertes Druckregelventil (72) umfaßt, das in der nicht-betätigten Position des zweiten Pneumatikventils (68), bei der sowohl die Zylinderals auch die Kolbenstangenseite der Stellgliedeinrichtung (38) mit Druck beaufschlagt sind, betreibbar ist, um den Luftdruck auf der Zylinderseite zu verringern, um gleiche und entgegengesetzt gerichtete Kräfte in der Stellgliedeinrichtung (38) zu erzielen, wodurch dessen Bewegung praktisch verhindert wird.

14. Mähdrescher nach einem der Ansprüche 7 bis 13,
dadurch gekennzeichnet, daß jedes der ersten Pneumatikventile (56, 57) einen pilotgesteuerten Betätigungsmechanismus (58) zur Verringerung der erforderlichen Kraft des Pendels (46) zur Betätigung des Ventils (56, 57) umfaßt.

15. Mähdrescher nach einem der vorhergehenden Ansprüche,
dadurch gekennzeichnet, daß der Körnerreinigungsmechanismus auf einem Hilfsrahmen (32) befestigt ist, der um eine sich allgemein in Längsrichtung des Mähdreschers (1) erstreckende Achse verschwenkbar ist, wobei der Hilfsrahmen (32) ein Befestigungsteil (42) umfaßt, an dem ein Ende der pneumatischen Stellgliedeinrichtung (38) befestigt ist, während deren anderes Ende mit einem weiteren Befestigungsteil (40) auf dem Maschinenrahmen (2) verbunden ist, wodurch Querschwingungen oder Stöße, die in dem Hilfsrahmen (32) beispielsweise aufgrund des Betriebs des Mähdreschers (1) auf einem aufgebrochenen Boden hervorgerufen werden, über das Befestigungsteil (42) in Richtung auf die Stellgliedeinrichtung (38) übertragen und in dieser elastisch aufgrund der komprimierten Luft gedämpft werden, die in der Stellgliedeinrichtung (38) enthalten ist, wodurch sich ein Abfederungseffekt ergibt.

16. Mähdrescher nach Anspruch 15, unter Rückbeziehung auf einen der Ansprüche 2 bis 14,
dadurch gekennzeichnet, daß zumindest das Pendel (46) und die ersten Pneumatikventile (56, 57) an einer Befestigungsplatte angebracht sind, die ihrerseits fest mit dem verschwenkbaren Hilfsrahmen (32) derart verbunden ist, daß das Pendel (46) betreibbar ist, um nur Änderungen der Querneigung des Hilfsrahmens (32) zu messen.

## Revendications

1. Moissonneuse-batteuse (1) comprenant:
- des moyens de battage et de séparation (8), et un mécanisme de nettoyage (9) destiné à recevoir le matériau de récolte battu et séparé issu des moyens de battage et de séparation (8); au moins une partie dudit mécanisme de nettoyage (9) pouvant pivoter autour d'un axe d'extension généralement longitudinale;
- des moyens de capteur d'inclinaison (46) pour la détection de l'inclinaison latérale de ladite partie pivotante du mécanisme de nettoyage (9) et la production d'un signal de sortie qui en est l'indication; et
- des moyens de contrôle de position (47) dont la fonction est d'ajuster ladite partie pivotante dudit mécanisme de nettoyage (9) sur une position généralement de niveau par rapport à la direction transversale; et
caractérisée en ce que:
le moyen de capteur d'inclinaison (46) est constitué d'un clinomètre du type pendulaire et comprend des surfaces d'engagement opposées (54); et les moyens de contrôle de position (47) comprennent:
- des moyens de soupapes pneumatiques (56, 57 et 68) actionnées en fonction du signal de sortie dudit moyen de capteur d'inclinaison (46) et comprenant des premières soupapes pneumatiques (56 et 57) prévues aux côtés latéraux opposés desdites surfaces d'engagement (54), chacune d'elles comportant un mécanisme d'activation (60); et
- un moyen d'activateur pneumatique (38) relié fonctionnellement d'une part aux moyens de soupapes pneumatiques (56, 57 et 68) et d'autre part à ladite partie pivotante du mécanisme de nettoyage (9);
l'arrangement étant tel que,
. lorsque le moyen de capteur d'inclinaison (46) est orienté dans une position inopérante, généralement verticale, lesdits mécanismes d'activation (60) des premières soupapes pneumatiques (56 et 57) sont très peu espacés des surfaces d'engagement correspondantes (54), et
. lorsque le moyen de capteur d'inclinaison (46) détecte un changement de l'inclinaison transversale de la partie pivotante du mécanisme de nettoyage (9) et tente d'ajuster son orientation verticale en fonction de ce changement d'inclinaison, le mécanisme d'activation (60) de la soupape pneumatique (56 ou 57), correspondant au côté le plus bas du mécanisme de nettoyage (9) incliné transversalement, est engagé par la surface d'engagement (54) correspondante, de sorte que ladite soupape (56 ou 57) est déplacée vers une position activée pour initier le mouvement de nivellement de ladite partie pivotante du mécanisme de nettoyage (9), de telle façon que, lorsque la moissonneuse-batteuse (1) est inclinée transversalement par rapport à la verticale, les moyens d'activateur pneumatique (38) pivotent ladite partie pivotante du mécanisme de nettoyage (9) pour la maintenir substantiellement à l'horizontale.

2. Moissonneuse-batteuse selon la revendication 1, caractérisée en ce que le moyen de capteur d'inclinaison (46) comprend un pendule (46) à pivotement libre composé d'une tige allongée (48), avec une des extrémités supportant un poids (52) et avec l'extrémité opposée reliée à un pivot (50), fonctionnellement associé à ladite partie pivotante du mécanisme de nettoyage (9).

3. Moissonneuse-batteuse selon la revendication 2, caractérisée en ce que lesdites surfaces d'engagement opposées (54) sont prévues sur ladite tige allongée (48), entre ses extrémités.

4. Moissonneuse-batteuse selon la revendication 3, caractérisée en ce que le positionnement des premières soupapes pneumatiques (56, 57) respectives par rapport au pendule (46) est tel qu'une modification de l'inclinaison transversale de ladite partie du mécanisme de nettoyage (9) de plus de 0,5° dans l'une ou l'autre direction entraîne une activation de l'une des premières soupapes pneumatiques (56, 57).

5. Moissonneuse-batteuse selon la revendication 3 ou 4, caractérisée en ce que les moyens de contrôle de position (47) comprennent en outre une source d'air comprimé (64), raccordée en communication d'écoulement avec une seconde soupape pneumatique (68) des moyens de soupapes (56, 57 et 68); la fonction de ladite seconde soupape pneumatique (68) étant:
- d'une part, dans sa position non-activée correspondant à l'orientation inactive du pendule (46), de pressuriser tant le côté de la tige que celui du cylindre du moyen d'activateur pneumatique (38), en maintenant par là la partie pivotante du mécanisme de nettoyage (9) dans une situation virtuellement bloquée et de niveau, et
- d'autre part, dans une position activée correspondant à une orientation inclinée du pendule (46), d'étendre et de contracter sélectivement le moyen d'activateur pneumatique (38) pour effectuer un ajustement de mise à niveau transversale de la partie pivotante du mécanisme de nettoyage (9).

6. Moissonneuse-batteuse selon la revendication 5, caractérisée en ce que les premières soupapes pneumatiques (56, 57) sont également raccordées en communication d'écoulement avec la source d'air comprimé (64), et leur fonction, dans la position activée, est de contrôler pneumatiquement la position de la seconde soupape pneumatique (68).

7. Une moissonneuse-batteuse selon la revendication 6, caractérisée en ce que
- les premières soupapes pneumatiques (56, 57) sont du type à trois voies, deux positions et coupant l'alimentation d'air comprimé dans leur position non-activée, tandis que, en position activée de l'une desdites soupapes (56, 57), l'air comprimé est conduit à la traverser en direction d'une conduite correspondante de pression (76), raccordant fonctionnellement lesdites premières et seconde soupapes pneumatiques (56 ou 57, et 68), et
- la seconde soupape pneumatique (68) est du type à cinq voies, trois positions; l'arrangement étant tel que l'état non-activé de tant lesdites premières soupapes pneumatiques (56 et 57) que ladite seconde soupape pneumatique (68) correspond, tandis que l'activation de l'une des premières soupapes (56 ou 57) en réponse à la rencontre d'une inclinaison transversale dans une direction donnée entraîne un déplacement sélectif de la seconde soupape (68) vers une position activée correspondant à ladite inclinaison rencontrée.

8. Moissonneuse-batteuse selon la revendication 7, caractérisée en ce que chaque conduite de pression (76) reliant fonctionnellement une des premières soupapes respectives avec la seconde soupape (56 ou 57, et 68) comprend une soupape de contrôle d'écoulement (78) dont la fonction est d'étrangler ou de restreindre le flux d'air comprimé au travers de chaque conduite respective de pression (76).

9. Moissonneuse-batteuse selon la revendication 8, caractérisée en ce que chaque conduite de pression (76) comprend en outre un moyen d'accumulation d'air (80) prévu entre ladite soupape de contrôle d'écoulement (78) et ladite seconde soupape pneumatique (68).

10. Moissonneuse-batteuse selon la revendication 9, caractérisée en ce que chaque dit moyen d'accumulation (80) est créé en surdimensionnant la portion de la conduite correspondante de pression (76) entre une des premières soupapes (56, 57) respectives et la seconde soupape (68) suivant la longueur et/ou le diamètre intérieur.

11. Moissonneuse-batteuse selon la revendication 9 ou 10, caractérisée en ce que, lors de l'activation de l'une des premières soupapes pneumatiques (56 ou 57), la soupape de contrôle d'écoulement (78) et le moyen d'accumulation d'air (80) correspondants coopèrent pour postposer l'activation de la seconde soupape pneumatique (68) pendant une période-seuil donnée, de manière à ne pas réagir à l'apparition de fluctuations rapides de déplacement angulaire de la moissonneuse-batteuse (1) en étouffant le fonctionnement des moyens de contrôle de position (47); l'arrangement étant tel que
- une activation continue de l'une des premières soupapes pneumatiques (56 ou 57) pendant une période inférieure à ladite période-seuil n'entraîne pas d'activation de la seconde soupape pneumatique (68), ce qui maintient la partie pivotante du mécanisme de nettoyage (9) dans sa position précédemment ajustée, et
- à condition que l'une des premières soupapes pneumatiques (56 ou 57) soit activée pendant une période supérieure à ladite période-seuil, l'activation de la seconde soupape (68) est uniquement postposée temporairement, après quoi ladite soupape (68) est néanmoins activée de manière à effectuer un ajustement de mise à niveau de la partie pivotante du mécanisme de nettoyage (9).

12. Moissonneuse-batteuse selon la revendication 11, caractérisée en ce que les soupapes de contrôle d'écoulement (78) sont réglables pour permettre de prédéterminer la durée de la période-seuil.

13. Moissonneuse-batteuse selon l'une quelconque des revendications 5 à 12, caractérisée en ce que
- des conduites de pression (70) relient fonctionnellement la seconde soupape pneumatique (68) avec le moyen d'activateur pneumatique (38); et
- la conduite de pression (70) allouée au côté du cylindre dudit moyen d'activateur (38) comprend une soupape de régulation asservie (72) destinée, dans la position non-activée de la seconde soupape pneumatique (68) où tant le côté du cylindre que le côté de la tige du moyen d'activateur (38) sont pressurisés, à réduire la pression de l'air audit côté du cylindre de manière à obtenir des forces égales et directement opposées dans ledit moyen d'activateur (38), ce qui empêche virtuellement tout mouvement de celui-ci.

14. Moissonneuse-batteuse selon l'une quelconque des revendications 7 à 13, caractérisée en ce que chacune des premières soupapes pneumatiques (56, 57) comprend un mécanisme d'activation asservi (58) pour réduire la force requise par le pendule (46) pour activer ladite soupape (56, 57).

15. Moissonneuse-batteuse selon l'une quelconque des revendications précédentes, caractérisée en ce que le mécanisme de nettoyage du grain est monté sur un sous-châssis (32), qui est pivotant autour d'un axe s'étendant généralement dans le sens longitudinal de la moissonneusebatteuse (1); le sous-châssis (32) comprenant un organe de montage (42) auquel une extrémité du moyen d'activateur pneumatique (38) est attachée, tandis que son autre extrémité est reliée à un organe de montage supplémentaire (40) situé sur le châssis de la machine (2), par quoi des vibrations ou chocs transversaux engendrés dans le sous-châssis (32), en raison par exemple du fonctionnement de la moissonneuse-batteuse (1) sur un sol accidenté, sont transmis via ledit organe de montage (42) vers le moyen d'activateur (38) et y sont atténués élastiquement grâce à l'air comprimé contenu dans ledit moyen d'activateur (38), fournissant ainsi un effet d'amortissement.

16. Moissonneuse-batteuse selon la revendication 15, lorsqu'elle se rapporte à l'une quelconque des revendications 2 à 14, caractérisée en ce qu'au moins le pendule (46) et les premières soupapes pneumatiques (56, 57) sont attachés à une plaque de montage à son tour fixée rigidement au sous-châssis pivotant (32) de telle manière que le pendule (46) fonctionne pour détecter uniquement des modifications de l'inclinaison transversale du sous-châssis (32).
